# EUROPÄISCHE PATENTSCHRIFT

(11) **EP 0 517 936 B1**
(45) Veröffentlichungstag und Bekanntmachung des Hinweises auf die Patenterteilung: **24.05.1995**
(21) Anmeldenummer: 91109504.0
(22) Anmeldetag: 10.06.1991
(51) Int. Cl.: H01G 4/228, H01G 4/38

(54) **Leistungskondensator mit reduzierter Eigeninduktivität**
Low-inductance power capacitor
Condensateur de puissance à faible inductance

(43) Veröffentlichungstag der Anmeldung: 16.12.1992
(73) Patentinhaber: SIEMENS AKTIENGESELLSCHAFT, 80333 München (DE)
(72) Erfinder: Vetter, Harald, Dipl.-Ing. (FH), W-7920 Heidenheim 5 (DE)

(56) Entgegenhaltungen:
- EP-A- 0 180 894
- EP-A- 0 388 689
- DE-A- 2 650 177
- DE-A- 3 047 796
- DE-A- 3 436 425
- SIEMENS COMPONENTS, Bd. 25, Nr. 3, Juli 1990,Berlin, DE Seiten 81 - 86; H. VETTER: "High-Performance Capacitors or Low-Inductance Circuits"

## Beschreibung

Die Erfindung betrifft einen Leistungskondensator mit reduzierter Eigeninduktivität, der insbesondere aus mindestens zwei Kondensatorwickeln aus Dielektrikumsfolien und Elektroden besteht, bei dem die Elektroden zu unterschiedlichen Wickelstirnseiten herausgeführt und mit auf den Stirnseiten angeordneten Schoopschichten kontaktiert sind, bei dem die Kondensatorwickel auf ihrer äußeren Wickelmantelfläche angeordnete Metallfolien besitzen, die als koaxialer Rückleiter des einen Wickelanschlusses dienen, wobei der Kondensator innere Anschlußelemente besitzt, die mit äußeren Anschlüssen verbunden sind und in ein metallisches Gehäuse eingebaut ist.

Aus der DE 34 36 425 A1 ist ein elektrischer Wickelkondensator mit verringerter Eigeninduktivität bekannt, der aus einem Kondensatorwickel besteht und den eingangs geschilderten Aufbau aufweist. Der bekannte Wickelkondensator weist innere Anschlußelemente auf, die radial symmetrisch und im wesentlichen deckend übereinander, symmetrisch zueinander und gegeneinander elektrisch isoliert angeordnet sind, und die mit den Kondensatorelektroden verbunden sind.

Es sind bereits auch Kondensatoraufbauten bekannt, die aus mehreren parallel geschalteten Rundwickeln bestehen.

Bei z. B. fünf parallel geschalteten Rundwickeln erreicht man mit einer Anschlußkonfiguration nach der genannten deutschen Offenlegungsschrift bei einer Wickelbreite von 130 mm eine Eigeninduktivität des Kondensators von ca. 300 - 400 nH.

Es gibt nun Anwendungsfälle, wo die genannte Eigeninduktivität des Kondensators erheblich zu groß ist.

Aufgabe der vorliegenden Erfindung ist es daher, einen Kondensator der eingangs genannten Art anzugeben, der insbesondere bei parallel geschalteten Kondensatorwickeln gegenüber herkömmlichen Kondensatoren eine erheblich reduzierte Eigeninduktivität besitzt.

Diese Aufgabe wird durch einen Kondensator gelöst, der die im Patentanspruch 1 angegebenen Merkmale aufweist.

Vorteilhafte Ausgestaltungen eines Leistungskondensators nach der Erfindung sind Gegenstand von Unteransprüchen.

Der Gegenstand der Erfindung wird anhand von Ausführungsbeispielen näher erläutert.

### In der dazugehörenden Zeichnung zeigen

Figur 1 ein Schnittbild eines Kondensators nach der Erfindung,
Figur 2 ein Teilschnittbild eines Einzelwickels und
Figur 3 ein Teilschnittbild mit zwei Kondensatorwickeln.

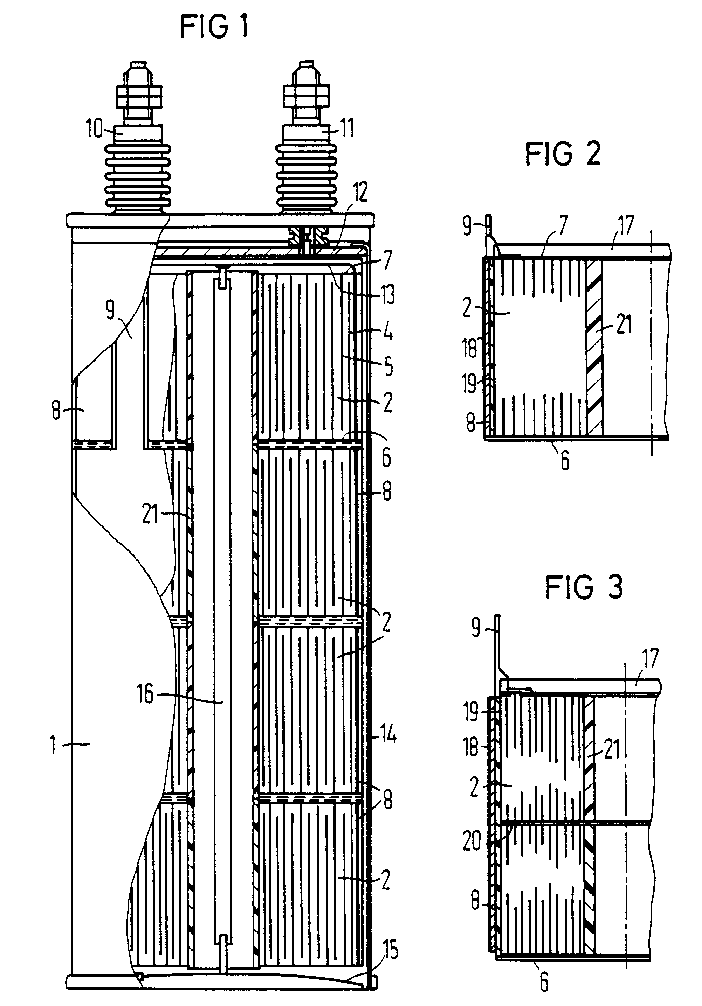

In der Figur 1 ist ein Leistungskondensator dargestellt, der aus vier parallel geschalteten Einzelwickeln 2 besteht. Die Kondensatorwickel 2 bestehen aus Dielektrikumsfolien und Elektroden 4, 5, wobei die Elektroden 4, 5 zu unterschiedlichen Wickelstirnseiten geführt und dort mit Schoopschichten 6, 7 kontaktiert sind. Auf der äußeren Wickelmantelfläche ist eine Metallfolie 8 angeordnet, die als koaxialer Rückleiter des einen Wickelanschlusses dient, der beispielsweise durch die mit den Elektroden 4 kontaktierte Schoopschicht 6 gebildet wird.

An der Metallfolie 8 ist eine besonders dünn (z.B. 0,5 mm und kleiner) ausgebildete Bandleitung 9 befestigt, die zur Verbindung mit dem äußeren Anschluß 11 dient. Der zweite äußere Anschluß 10 ist mit dem anderen Wickelabschluß, der durch die Schoopschicht 7 und die Elektroden 5 gebildet wird, verbunden. Die Ankontaktierung an die äußeren Anschlüsse 10, 11 geschicht dabei mit Hilfe der in der eingangs genannten deutschen Offenlegungsschrift geschilderten radial symmetrischen Anschlußelemente, die durch die beiden gegeneinander elektrisch isolierten übereinanderliegenden Anschlußelemente 12, 13 gebildet werden.

Die Anzahl der Bandleitungen 9 ist vorteilhafterweise größer als 1, und sie werden am Umfang der als koaxiale Rückleitung dienenden Metallfolie 8 symmetrisch angeordnet, d. h., bei zwei Bandleitungen 9 um 180° versetzt.

Die Bandleitungen, die als Rückleitung der anderen Kondensatorwickel dienen, werden ebenfalls so befestigt, daß sich insgesamt gesehen eine symmetrische Anordnung sämtlicher Bandleitungen im Kondensator 1 ergibt. Die Bandleitungen 9 sind somit nicht nur symmetrisch an einer Metallfolie 8 sondern auch symmetrisch zueinander angeordnet.

Der Kondensator 1 ist in ein metallisches Gehäuse 14 eingebaut, das einen nach innen gewölbten Boden 15 aufweist. Am Kondensatorboden 15 ist ein isoliertes Spannband 16 befestigt, das auf der anderen Seite mit der Scheibe 13 der radial symmetrischen Anschlußelemente 12, 13 geführt ist. Hierdurch wird eine Überdruckabreißsicherung geschaffen, die über eine gezielte Schwachstelle in der als Sicherung ausgebildeten radial symmetrischen Anschlußelemente 12, 13 den Strompfad nach dem Stand der Technik im Einzelfall unterbricht.

Die Elektroden 4, 5 des Kondensators bestehen vorzugsweise aus regenerierfähigen Metallschichten, wobei es vorteilhaft ist, die Elektroden beidseitig auf einem Trägermaterial, z. B. Papier, anzuordnen und elektrisch miteinander zu verbinden, sodaß sich der Elektrodenträger im feldfreien Raum befindet.

Als Dielektrikum eignen sich die bekannten Materialien wie z. B. Polypropylen, Polycarbonat, Polyethylenterefthalat usw.

Alternativ sind auch einseitig metallisierte Kunststoffmaterialien, und gegebenenfalls auch Aufbauten in nicht selbstheilender Ausführung (Film-Folienaufbau oder Dickschicht-Metallisierung) möglich.

Versuche mit dem in der Figur 1 dargestellten Aufbau haben ergeben, daß bereits mit zwei symmetrisch angeordneten Bandleitungen 9 je Kondensatorwickel 2 in Verbindung mit einer radial symmetrischen Anschlußelemente 12, 13 Induktivitätswerte im Bereich von 30 bis 50 nH erreicht werden, so daß eine deutlich verminderte Eigeninduktivität des Kondensators gewährleistet ist.

In der Figur 2 ist in einem vergrößerten Ausschnitt ein Einzelwickel 6 dargestellt. Auf der äußeren Hohlwand des Kondensatorwickels 6 befindet sich eine Isolierfolie 19 auf der die Metallfolie 8 angeordnet ist. Die Metallfolie 8 ist auf ihrer Außenseite mit einer weiteren Folie 18 isoliert. Die an der Metallfolie 8 angeordnete Bandleitung 9 ist nach oben herausgeführt. Die obere Schoopschicht 7 ist mit einer Isolierung 17 abgedeckt.

In der Figur 3 sind zwei in Serie geschaltete Kondensatorwickel 6 dargestellt, wobei die Serienschaltung achsenzentriert durch eine Verlötung 20 erzeugt und die konzentrische Rückleitung über die Metallfolie 8 und die Bandleitung 9 erfolgt. Die derart hergestellten Wickelelemente werden dann wie in der Figur 1 beschrieben parallel verschaltet. Die rückleitenden, symmetrisch angeordneten Bandleitungen 9 münden in eine weitere Bandleitung in Form einer gegeneinander isolierten Metallscheibe (radial symmetrische Anschlußelemente 12, 13 in Figur 1) wie sie aus der DE 34 36 425 A1 bekannt ist.

Durch die ebenfalls symmetrische Anbindung der streifenförmigen Bandleitungen 9 an die radial symmetrische Anschlußelemente 12, 13 wird ein besonders niederinduktiver Aufbau bis zu den Anschlußbolzen 10, 11 des Kondensators 1 erreicht.

Durch die beschriebene niederinduktive Verschaltung bei der die Bandleitungen im Bereich der Außenhülle angeordnet sind, kann der sonst von Kabelbäumen beanspruchte Konstruktionsraum freigehalten werden, sodaß Kernrohre 21 mit sehr kleinem Durchmesser eingesetzt werden können.

## Patentansprüche

1. Leistungskondensator (1) mit reduzierter Eigeninduktivität, der aus mindestens zwei Kondensatorwickeln (2) aus Dielektrikumsfolien und Elektroden (4, 5) besteht, bei dem die Elektroden (4, 5) zu unterschiedlichen Wickelstirnseiten herausgeführt und mit auf den Stirnseiten angeordneten Schoopschichten (6, 7) kontaktiert sind, bei dem die Kondensatorwickel (2) auf ihrer äußeren Wickelmantelfläche angeordnete Metallfolien (8) besitzen, die als koaxialer Rückleiter des einen Wickelanschlusses dienen, wobei der Kondensator (1) innere Anschlußelemente besitzt, die mit äußeren Anschlüssen (10, 11) verbunden sind und der in ein metallisches Gehäuse (14) eingebaut ist,
**dadurch gekennzeichnet**,
daß an den Metallfolien (8) symmetrisch angeordnete Bandleitungen (9) befestigt sind, die zur Verbindung mit einem der äußeren Anschlüsse (11) dienen und daß die Bandleitungen (9) derart an den Metallfolien (8) befestigt sind, daß sich eine symmetrische Anordnung sämtlicher Bandleitungen (9) im Kondensator (1) ergibt.

2. Leistunskondensator nach Anspruch 1,
**dadurch gekennzeichnet**,
daß an einer Stirnseite zwei gegeneinander isolierte Metallscheiben (12, 13) angeordnet sind, die mit den Bandleitungen (9) und den äußeren Anschlüssen (10, 11) verbunden sind.

3. Leistungskondensator nach Anspruch 1 oder 2,
**dadurch gekennzeichnet**,
daß er eine Überdruckabreißsicherung besitzt.

4. Leistungskondensator nach einem der Ansprüche 1 bis 3 ,
**dadurch gekennzeichnet**,
daß die Elektroden (4, 5) aus regenerierfähigen Metallschichten bestehen.

5. Leistungskondensator nach Anspruch 4,
**dadurch gekennzeichnet**,
daß die Elektroden (4, 5) beidseitig auf jeweils einem Trägermaterial angeordnet und dort elektrisch miteinander verbunden sind.

6. Leistungskondensator nach Anspruch 5,
**dadurch gekennzeichnet**,
daß das Trägermaterial aus Papier besteht.

7. Leistungskondensator nach einem der Ansprüche 1 bis 6,
**dadurch gekennzeichnet**,
daß die Dielektrikumsfolien aus Polypropylen, Polycarbonat oder Polyethylenterephthalat bestehen.

## Claims

1. Power capacitor (1) having reduced intrinsic inductance, which comprises at least two capacitor windings (2) made of dielectric films and electrodes (4, 5), in the case of which capacitor the electrodes (4, 5) are passed out at different winding ends and make contact with sprayed-metal layers (6, 7) arranged on the ends, in the case of which capacitor the capacitor windings (2) have metal foils (8) which are arranged on their outer winding casing surface and are used as the coaxial return conductor of one winding connection, the capacitor (1) having inner connecting elements which are connected to outer connections (10, 11), and which capacitor is installed in a metallic housing (14), characterized in that symmetrically arranged striplines (9) are fastened to the metal foils (8), which striplines (9) are used for connection to one of the outer connections (11), and in that the striplines (9) are fastened to the metal foils (8) in such a manner that a symmetrical arrangement of all the striplines (9) in the capacitor (1) results.

2. Power capacitor according to Claim 1, characterized in that two mutually insulated metal discs (12, 13), which are connected to the striplines (9) and to the outer connections (10, 11), are arranged at one end.

3. Power capacitor according to Claim 1 or 2, characterized in that it has an overpressure tearing protection device.

4. Power capacitor according to one of Claims 1 to 3, characterized in that the electrodes (4, 5) comprise metal layers which can be regenerated.

5. Power capacitor according to Claim 4, characterized in that the electrodes (4, 5) are arranged on both sides on in each case one carrier material and are electrically connected to one another there.

6. Power capacitor according to Claim 5, characterized in that the carrier material comprises paper.

7. Power capacitor according to one of Claims 1 to 6, characterized in that the dielectric films comprise polypropylene, polycarbonate or polyethylene terephthalate.

## Revendications

1. Condensateur de puissance (1) d'une inductance propre réduite et constitué d'au moins deux enroulements (2) de condensateur en feuilles diélectriques et d'électrodes (4,5), dans lequel les électrodes (4,5) sortent sur des faces frontales différentes de bobinage et sont placées en contact avec des couches de schoopage (6,7) prévues sur les faces frontales, dans lequel les enroulements (2) de condensateur possèdent des feuilles métalliques (8) disposées sur leur surface latérale extérieure d'enroulement et qui sont utilisées en tant que conducteur de retour coaxial d'une borne de l'enroulement, le condensateur (1) possédant des éléments intérieurs de raccordement, qui sont reliés à des bornes extérieures (10,11), et étant monté dans un boîtier métallique (14),
caractérisé par le fait
que sur les feuilles métalliques (8) sont fixés des conducteurs en forme de bandes (9) disposés symétriquement et servant à établir la liaison avec l'une des bornes extérieures (11), et que les conducteurs en forme de bandes (9) sont fixés aux feuilles métalliques (8) de telle sorte qu'on obtient une disposition symétrique de tous les conducteurs en forme de bandes (9) du condensateur (1).

2. Condensateur de puissance suivant la revendication 1, caractérisé par le fait que sur une face frontale sont disposés deux disque métalliques (12,13) isolés l'un par rapport à l'autre et reliés aux conducteurs en forme de bandes (9) et aux bornes extérieures (10,11).

3. Condensateur de puissance suivant la revendication 1 ou 2, caractérisé par le fait qu'il possède un système de protection contre une rupture en cas de surpression.

4. Condensateur de puissance suivant l'une des revendications 1 à 3, caractérisé par le fait que les électrodes (4,5) sont constituées par des couches métalliques régénérables.

5. Condensateur de puissance suivant la revendication 4, caractérisé par le fait que les électrodes (4,5) sont disposées des deux côtés sur un matériau de support et y sont reliées entre elles électriquement.

6. Condensateur de puissance suivant la revendication 5, caractérisé par le fait que le matériau de support en papier.

7. Condensateur de puissance suivant l'une des revendications 1 à 6, caractérisé par le fait que les feuilles de diélectrique sont en polypropylène, en polycarbonate ou poly(téréphtalate d'éthylène).
